(19) Europäisches Patentamt
European Patent Office
Office européen des brevets

(11)  EP 2 634 543 A1

(12)  **EUROPÄISCHE PATENTANMELDUNG**

(43) Veröffentlichungstag:
04.09.2013  Patentblatt 2013/36

(51) Int Cl.:
*G01G 7/04* (2006.01)

(21) Anmeldenummer: 12157426.3

(22) Anmeldetag: 29.02.2012

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME

(71) Anmelder: Mettler-Toledo AG
8606 Greifensee (CH)

(72) Erfinder:
• Béguin, Christophe
8620 Wetzikon (CH)
• Koeppel, Thomas
8618 Oetwil am See (CH)
• Baltisberger, Stephan
8625 Gossau (CH)

(54)  **Wägezelle nach dem Prinzip der magnetischen Kraftkompensation mit optoelektronischem Positionssensor**

(57)  Eine Wägezelle (1), die auf dem Prinzip der elektromagnetischen Kraftkompensation basiert, weist ein feststehendes Basisteil (2), einen am Basisteil (2) beweglich gelenkten Lastaufnehmer (3) zur Aufnahme der Gewichtskraft einer zu wägenden Last (4), ein Permanentmagnetsystem (5) mit einem Luftspalt (6), eine im Luftspalt (6) bewegliche und im Messbetrieb von einem Kompensationsstrom (7) durchflossene Spule (8), sowie eine kraftübertragenden mechanischen Verbindung (9) zwischen dem Lastaufnehmer (3) und der Spule (8) auf. Es ist ferner ein optoelektronischer Positionssensor vorhanden, welcher eine Lichtquelle (12), einen Lichtempfänger (13), sowie eine an der beweglichen kraftübertragenden Verbindung festgelegte Blendenfahne (10) umfasst, wobei die Mittelpunkte der Lichtquelle (12) und des Lichtempfängers (13) eine optische Achse (y) definieren und wobei die Lichtquelle (12) und der Lichtempfänger (13) einander in einem Distanzintervall (d) gegenüberliegen und die Blendenfahne (10) in einem Blendenabstand ($d_B$) auf der optischen Achse zwischen der Lichtquelle (12) und dem Lichtempfänger (13) beweglich angeordnet ist. Mit dem Lichtempfänger (13) ist ein Positionssensorsignal (S) erzeugbar, welches einer durch das Auflegen der Last (4) auf den Lastaufnehmer (3) verursachten Auslenkung (z) der Blendenfahne (10) aus einer Null-Lage entspricht, wobei ein Regler (15) vorhanden ist, mit welchem der Kompensationsstrom (7) aufgrund des Positionssensorsignals (S) in der Weise regelbar ist, dass die Blendenfahne (10) und die mit ihr verbundenen beweglichen Teile der Wägezelle durch die elektromagnetische Kraft zwischen der Spule (8) und dem Permanentmagnetsystem (5) in die Null-Lage zurückgeführt werden. Der Blendenabstand ($d_B$) liegt in einem dem Lichtempfänger (13) benachbarten Unterbereich (u) des Distanzintervalls (d), wobei sich dieser Unterbereich (u) über höchstens ein Drittel des Distanzintervalls (d) erstreckt.

Fig. 4

EP 2 634 543 A1

**Beschreibung**

Die vorliegende Erfindung betrifft eine auf dem Prinzip der magnetischen Kraftkompensation basierende Waage oder Wägezelle mit einem optoelektronischen Positionssensor.

Das Prinzip der elektromagnetischen Kraftkompensation hat ein weites Anwendungsgebiet in den verschiedenartigsten Waagen, die im Handel, in der Industrie und in Laboratorien eingesetzt werden. Eine besondere Stärke dieses Prinzips liegt darin, dass sich damit Waagen von enormer Messgenauigkeit realisieren lassen. Mit einer nach dem elektromagnetischen Kraftkompensationsprinzip funktionierenden Analysenwaage kann z.B. eine Wägelast von 100 g mit einer Messauflösung von 0,01 mg bestimmt werden, d.h. auf ein Zehnmillionstel genau.

Eine Waage oder Wägezelle der vorliegenden Erfindung hat gattungsgemäss ein feststehendes Basisteil, einen am Basisteil beweglich gelenkten Lastaufnehmer zur Aufnahme der Gewichtskraft einer zu wägenden Last, ein vorwiegend am Basisteil festgelegtes Permanentmagnetsystem mit einem Luftspalt, eine im Luftspalt bewegliche und von einem Kompensationsstrom durchflossene Spule, sowie einen den Lastaufnehmer mit der Spule verbindenden Kraftübertragungsmechanismus. Ein optoelektronischer Positionssensor, dessen Sensorsignal der durch das Auflegen der Last auf den Lastaufnehmer verursachten Auslenkung der miteinander verbundenen beweglichen Teile der Waage aus einer Null-Lage entspricht, umfasst typischerweise eine Lichtquelle und einen Lichtempfänger, welche mit einem Zwischenraum meist auf dem Basisteil festgelegt sind, sowie eine den Zwischenraum durchsetzende und die Auslenkung der beweglichen Teile mitmachende Blendenfahne. Das Signal des Positionssensors wird einem Regler zugeführt, welcher daraufhin den Kompensationsstrom so regelt, dass die Blendenfahne und die mit ihr verbundenen beweglichen Teile der Waage durch die elektromagnetische Kraft zwischen Spule und Permanentmagnet in die Null-Lage zurückgeführt werden. Mit andern Worten, die Regelung sorgt dafür dass die elektromagnetische Kompensationskraft der Wägelast Gleichgewicht hält. Da nach den Gesetzen des Elektromagnetismus die Stärke des Spulenstromes und die erzeugte Kraft zueinander proportional sind, kann das Gewicht einer auf den Lastempfänger gebrachten Wägelast durch Messung des Spulenstroms bestimmt werden.

Innerhalb des vorstehend umrissenen Gebietes konzentriert sich die vorliegende Erfindung auf den optoelektronischen Positionssensor, insbesondere auf die Geometrie des Positionssensors, d.h. die Grössen- und Abstandverhältnisse der Elemente innerhalb der Positionssensoranordnung, welche die Lichtquelle, den Lichtempfänger und die Blendenfahne umfasst. Der Lichtempfänger weist vorwiegend eine Photodiode mit mindestens einem lichtempfindlichen Bereich oder Element auf. Eine Photodiode ist ein Halbleiterelement, welches unter Lichteinfluss einen Strom erzeugt, der innerhalb eines bestimmten Bereiches zur einfallenden Lichtmenge proportional ist.

Häufig weist die Blendenfahne eine schlitzförmige Blendenöffnung auf, sie kann jedoch auch weitere Formen einer für Licht durchlässigen Öffnung umfassen, beispielsweise ein kreisförmiges Loch oder ein Langloch. Der Lichtempfänger kann als zwei getrennte, in einer Differenzschaltung betriebene lichtempfindliche Bereiche der Photodiode ausgebildet sein. Bei einer Auslenkung der Blendenfahne aus ihrer Null-Lage verschiebt sich dann das Beleuchtungsbild auf dem Lichtempfänger, so dass der eine lichtempfindliche Bereich mehr, der andere weniger Licht erhält. In einer ausgelenkten Lage der Blendenfahne sind dementsprechend die von den beiden lichtempfindlichen Bereichen erzeugten Ströme verschieden gross, wobei die mit der Differenzschaltung der lichtempfindlichen Bereiche erfasste Stromdifferenz das elektrische Ausgangssignal des Lichtempfängers, also das Positionssensorsignal, darstellt. Der funktionelle Zusammenhang zwischen der Auslenkung und dem elektrischen Positionssensorsignal wird auch als Kennlinie des Positionssensors bezeichnet.

Die Hauptanforderung an den Positionssensor einer elektromagnetischen Kompensationswaage besteht darin, dass die Null-Lage, d.h. die auf das feststehende Basisteil bezogene Position der Abtastfahne bei welcher der Nulldurchgang des Sensorsignals zwischen negativen und positiven Werten stattfindet, mit höchster Genauigkeit und Reproduzierbarkeit eingehalten werden muss. Die Nullpunktsempfindlichkeit, d.h. die Steigung der Kennlinie in ihrem Nullpunkt, sollte daher möglichst hoch sein, so dass Auslenkungen im Nanometerbereich ein eindeutig messbares Sensorsignal erzeugen.

Ausserdem sollte der Verlauf des Sensorsignals über den Auslenkungsbereich der Blendenfahne, d.h. die Kennlinie des Positionssensors, gut reproduzierbar sein, sowohl im Vergleich von einer Wägezelle zur nächsten innerhalb einer Produktionsserie, als auch innerhalb einer einzelnen Wägezelle, wenn dieselbe z.B. Temperaturschwankungen und Erschütterungen ausgesetzt ist.

Schliesslich ist es wünschbar, dass die Kennlinie des Positionssensors mit guter Näherung eine lineare Funktion darstellt und insbesondere, dass das Sensorsignal zur Auslenkung proportional ist. Die Forderung einer guten Linearität und insbesondere Proportionalität des Sensorsignals hängt unter anderem damit zusammen, dass der Regelkreis der elektromagnetischen Kraftkompensation bevorzugt als ein sogenannter PID-Regler ausgelegt ist, was bedeutet, dass die Kompensationskraft und damit der als Ausgangsgrösse des Reglers erzeugte Spulenstrom einer gewichteten Summe aus einem zur Auslenkung proportionalen Anteil P, einem zum zeitlichen Integral der Auslenkung proportionalen Anteil I und einem zur zeitlichen Ableitung der Auslenkung proportionalen Anteil D entspricht. Damit die hier vorausgesetzte Proportionalität der drei Anteile P, I, D zur Auslenkung gewährleistet ist, sollte selbstverständlich das Sensorsignal möglichst proportional zur Auslenkung sein.

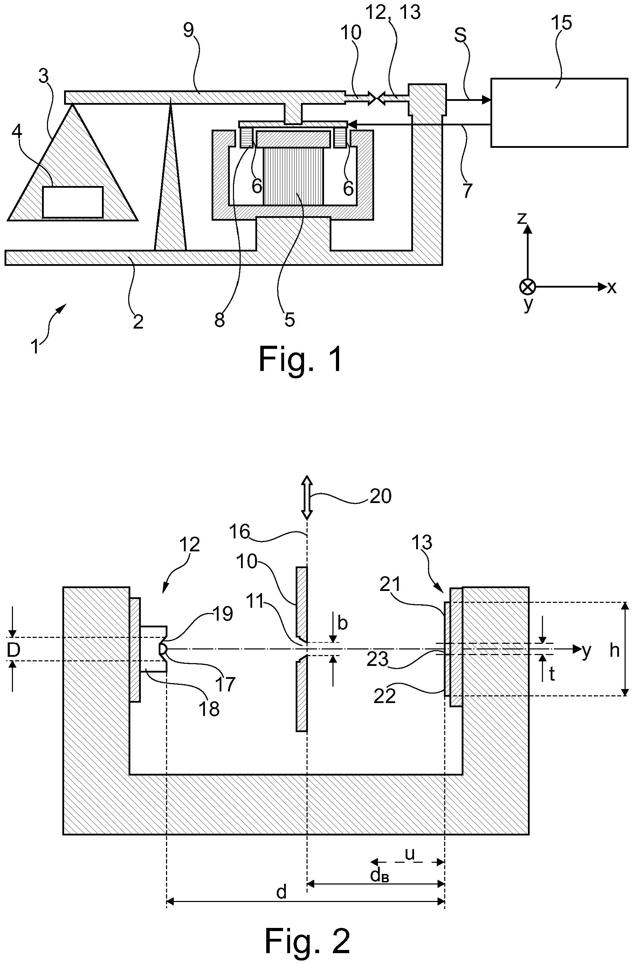

Die Betrachtungsweise des Positionssenders als optisches Abbildungssystem erkennt man beispielsweise in CH 463 137. Darin wird eine elektromagnetische Kompensationswaage mit einem Waagebalken gezeigt, der an seinem einen Ende eine hängende Waagschale und am anderen Ende eine Blendenfahne mit schlitzförmiger Blendenöffnung trägt, welche sich in den Zwischenraum zwischen einer Lichtquelle und einem Lichtempfänger hinein erstreckt. Ein optisches System, welches in Figur 1 der erwähnten Schrift rudimentär als je eine Linse im Lichtpfad vor und nach der Blende dargestellt ist, dient in nicht näher beschriebener Weise dazu, die optische Abbildung der Lichtquelle auf den Lichtempfänger zu verbessern oder zu verstärken. Eine solche Anordnung von optischen Linsen im Lichtpfad des Positionssensors erfordert jedoch geeignete, im allgemeinen grössere Abstände von der Blende zur Lichtquelle und zum Lichtempfänger, was insbesondere bei Wägezellen mit kompaktem monolithischem Aufbau nicht in Frage kommt. Ausserdem verteuert sich der Herstellungsaufwand.

Eine in US 5,338,902 gezeigte Lösung zielt darauf ab, die Empfindlichkeit des Positionssensors einer elektromagnetischen Kompensationswaage mit mechanischen Massnahmen zu steigern. Die Lichtquelle und der Lichtempfänger sind hier nicht wie üblich ortsfest mit der Trägerbasis der Waage verbunden, sondern sind an einem mit dem beweglichen Lastträger der Waage fest verbundenen langen Auslegerarm angeordnet, so dass sie sich zusammen mit dem Lastträger auf- und abwärts bewegen. Ein an der ortsfesten Trägerbasis der Waage drehbar gelagerter doppelarmiger Hebel ist auf einer Seite an den Lastträger der Waage gekoppelt und trägt am andern Ende die Blendenfahne, sodass sich die Blendenfahne und der Lastträger in entgegengesetztem Sinne auf- und abbewegen. Somit ist die Aufwärts- und Abwärtsbewegung der Blendenfahne mit einer gegenläufigen Bewegung der Lichtquelle und des Lichtempfängers verbunden, was einer grösseren Relativbewegung der Blendenfahne gegenüber der Lichtquelle und dem Lichtempfänger entspricht. Im Vergleich zur üblichen ortsfesten Anordnung der Lichtquelle und des Lichtempfängers wird folglich bei gleicher Auslenkung des Lastträgers ein stärkeres Positionssensorsignal erzeugt. Auch diesem Konzept stehen praktische Bedenken gegenüber, indem der Trägerarm sich durch einen Bereich der Wägezelle erstrecken müsste, welcher in vielen Fällen bereits durch den oben genannten, den Lastträger mit der Kompensationsspule verbindenden Kraftübertragungsmechanismus besetzt ist.

In einem optoelektronischen Positionssensor gemäss US 3,805,907 besteht die Lichtquelle aus einer Leuchtdiode, und der Lichtempfänger wird von zwei Phototransistoren in Differentialschaltung gebildet. Die Phototransistoren sind auf der Stirnfläche einer am feststehenden Grundrahmen der Waage drehbar montierten Trägerscheibe diametral-symmetrisch zueinander angeordnet. Durch Verdrehen der Trägerscheibe kann die Empfindlichkeitskennlinie, d.h. die Abhängigkeit des Sensorsignals von der Auslenkung der Blendenfahne, justiert werden. Bezüglich der Geometrie des Abbildungssystems wird insbesondere ausgeführt, dass die Distanz zwischen den zwei lichtempfindlichen Flächenbereichen des Lichtempfängers der Schlitzweite der Blende entspricht, dass die licht-emittierende Oberfläche der Lichtquelle so nahe wie möglich bei der Blende liegt, dass die lichtempfindlichen Bereiche des Lichtempfängers kreisförmig sind, und dass die licht-emittierende Oberfläche der Lichtquelle etwas breiter ist als der Blendendschlitz und insbesondere 1,5 mal so breit wie der Blendenschlitz. Hier ist einzuwenden, dass die oben erwähnte Kennlinie oder Empfindlichkeitskurve bei einer solchen Anordnung mit kreisrunden lichtempfindlichen Flächenbereichen des Lichtempfängers keineswegs über den ganzen Auslenkungsbereich der Blendenfahne linear ist, sondern mit wachsender Auslenkung z.B. einen progressiv steileren oder progressiv flacheren Verlauf nehmen kann.

Im Stand der Technik sind Wägezellen mit elektromagnetischer Kraftkompensation bekannt, bei deren Positionssensor die Blendenfahne in einer Blendenebene ungefähr in der Mitte zwischen der Lichtquelle und dem Lichtempfänger angeordnet ist. Kleine Variationen in der Position der Blendenebene bei einer Produktionsserie von Wägezellen führen zu einer Streuung der Sensorempfindlichkeit. Infolgedessen kann es bei bestimmten Produkten notwendig werden, in der Wägezellenproduktion jede Einheit individuell abzugleichen, was den Produktionsvorgang verteuert.

Die vorliegende Erfindung hat deshalb zur Aufgabe, einen Positionssensor für eine auf dem elektromagnetischen Kraftkompensationsprinzip beruhende Waage zu schaffen, welcher die oben genannten Hauptanforderungen an die Genauigkeit und Reproduzierbarkeit der Nullposition sowie an die Reproduzierbarkeit und Linearität der Empfindlichkeitskurve in höherem Masse erfüllt als der gegenwärtige Stand der Technik. Dabei soll die Erfindungsaufgabe nach herstelltechnischen Gesichtspunkten möglichst optimal gelöst werden.

Diese Aufgabe wird erfüllt durch eine auf dem Prinzip der elektromagnetischen Kraftkompensation basierende Waage oder Wägezelle mit einem optoelektronischen Positionssensor gemäss dem unabhängigen Anspruch 1.

Weitere Ausführungsformen und Einzelheiten der Erfindung werden in den abhängigen Ansprüchen beschrieben.

Eine Wägezelle nach dem Prinzip der elektromagnetischen Kraftkompensation umfasst einen feststehenden Basisteil, einen am Basisteil beweglich gelenkten Lastaufnehmer zur Aufnahme der Gewichtskraft einer zu wägenden Last, ein Permanentmagnetsystem mit einem Luftspalt, eine im Luftspalt bewegliche und von einem Kompensationsstrom durchflossene Spule, eine kraftübertragende mechanische Verbindung zwischen dem Lastaufnehmer und der Spule, ferner einen optoelektronischen Positionssensor, sowie einen Regler, welcher aufgrund eines Signals des Positionssensors den Kompensationsstrom so regelt, dass die Spule und der mit ihr verbundene Lastaufnehmer durch die elektromagnetische Kraft zwischen Spule und Permanentmagnet in die Null-Lage zurückführt werden. Dabei umfasst der Positionssensor eine Lichtquelle und einen Lichtempfänger, welche einander mit einem Zwischenraum in einem Distanzintervall gegenüberliegend angeordnet sind und mit ihren Mittelpunkten eine optische Achse des Positionssensors definieren, sowie eine an der beweglichen kraftübertragenden Verbindung festgelegte Blendenfahne, welche sich in der Art einer Lichtschranke im Wesentlichen in einer zur optischen Achse orthogonalen Blendenebene im besagten Zwischenraum bewegt.

Mit dem Lichtempfänger ist ein Positionssensorsignal erzeugbar, welches einer durch das Auflegen der Last auf den Lastaufnehmer verursachten Auslenkung der Blendenfahne aus einer Null-Lage entspricht, wobei ein Regler vorhanden ist, mit welchem der Kompensationsstrom aufgrund des Positionssensorsignals in der Weise regelbar ist, dass die Blendenfahne und die mit ihr verbundenen beweglichen Teile der Wägezelle durch die elektromagnetische Kraft zwischen der Spule und dem Permanentmagnetsystem in die Null-Lage zurückgeführt werden.

Im Folgenden sei die zur optischen Achse orthogonale Ebene am Ort der Nullposition der Blendenfahne als Blendenebene definiert.

Erfindungsgemäss liegt der Blendenabstand in einem dem Lichtempfänger benachbarten Unterbereich des Distanzintervalls, wobei dieser Unterbereich um ein mehrfaches kleiner ist als das Distanzintervall, das heisst, dass der Unterbereich sich über höchstens ein Drittel des Distanzintervalls erstreckt. Dies bedeutet, dass der Durchstosspunkt der optischen Achse mit der Blendenebene in einem ausgewählten, dem Lichtempfänger benachbarten Unterbereich des besagten Distanzintervalls liegt, wobei dieser Unterbereich erheblich kleiner ist, als das Distanzintervall und lediglich einen Bruchteil desselben einnimmt. Dieser Bruchteil entspricht höchstens einem Drittel, bevorzugt einem Viertel des gesamten Distanzintervalls.

Die erfindungsgemässe Anordnung, bei der die Blendenfahne um ein mehrfaches näher beim Lichtempfänger als bei der Lichtquelle liegt, unterscheidet sich grundsätzlich von der üblichen Praxis, die Blendenfahne ungefähr in der Mitte, d.h. äquidistant von der Lichtquelle und vom Lichtempfänger anzuordnen. Insbesondere steht diese Anordnung auch im Gegensatz zum zitierten Stand der Technik gemäss US 3,805,907, worin die Blendenfahne so nahe als möglich bei der Lichtquelle angeordnet ist.

Vorzugsweise ist das Parmanentmagnetsystem am Basisteil festgelegt. Auch der optoelektronische Positionssensor ist bevorzugt auf dem Basisteil festgelegt.

Das Positionssensorsignal ist eine Funktion der Auslenkung und kann in dieser Abhängigkeit auch als Positionssensorsignalfunktion oder Kennlinie bezeichnet werden, deren Ableitung nach der Auslenkung im Folgenden als die Empfindlichkeit des Positionssensors bezeichnet wird.

In bevorzugter Weise zeichnet sich der Unterbereich gegenüber dem Rest des Distanzintervalls dadurch aus, dass die auf eine Normierungskonstante bezogene, der Ableitung des Positionssensorsignals nach der Auslenkung der Blendenfahne entsprechende normierte Empfindlichkeit des Positionssensors im Wesentlichen ihren Maximalwert einnimmt. Insbesondere ist die auf die genannte Normierungskonstante bezogene Positionssensorsignalfunktion zumindest innerhalb eines beschränkten und sich mit abnehmendem Blendenabstand vergrössernden Bereiches der Auslenkung im Wesentlichen linear.

Oben besagter Unterbereich des Distanzintervalls, in welchem der Blendenabstand vom Lichtempfänger zu liegen kommt, zeichnet sich ferner gegenüber dem Rest des Distanzintervals dadurch aus, dass die innerhalb des Unterbereichs und des erwähnten beschränkten Bereiches der Auslenkung sich die normierte Empfindlichkeit bei einer Änderung des Blendenabstandes im Wesentlichen nicht ändert.

Die Erkenntnis, dass innerhalb des Distanzintervalls zwischen der Lichtquelle und dem Lichtempfänger ein Unterbereich existiert, in welchem die oben genannten Bedingungen einer hohen Nullpunktssteigung und Linearität der Signalfunktion und ihrer Unveränderlichkeit bei Verschiebungen der Blendenebene entlang der optischen Achse im wesentlichen erfüllt sind und dass dieser Unterbereich dem Lichtempfänger benachbart ist, basiert auf einem überraschenden Hauptergebnis von durchgeführten Experimenten, welche weiter unten anhand von Diagrammen näher beschrieben werden.

Die Bewegung der Blendenfahne definiert bei ihrem Durchgang durch die Null-Lage eine zu der in y-Richtung verlaufenden optischen Achse senkrechte z-Richtung sowie eine gleichzeitig zur z-Richtung und zur optischen Achse senkrechte x-Richtung. Die Blendenebene verläuft senkrecht zur optischen Achse und damit in x-z-Richtung, wobei die Blendenfahne nur bei ihrem Durchgang durch die Null-Lage in der Blendenebene liegt, ansonsten bei genauer Betrachtung aufgrund ihrer Kreisbewegung bei der Auslenkung einen extrem kleinen Abstand zu dieser einnimmt.

In einer vorteilhaften Ausgestaltung ist die Auslenkung der Blendenfahne durch Anschläge auf einen Auslenkungsbereich beschränkt. Die Blendenfahne hat mit Vorteil eine Blendenöffnung, insbesondere einen Blendenschlitz mit einer Schlitzweite in z-Richtung. Die Blendenöffnung kann jedoch auch ein kreisförmiges Loch umfassen oder ein Langloch.

In einer Weiterbildung der Erfindung umfasst die Lichtquelle eine in einen Trägerblock integrierte Leuchtdiode. Bevorzugterweise hat der Lichtempfänger mindestens einen lichtempfindlichen Flächenbereich mit einer vorgegebenen Höhe in z-Richtung.

Im Messbetrieb projiziert das von der Lichtquelle durch den Blendenschlitz gestrahlte Licht ein Beleuchtungsbild auf dem lichtempfindlichen Flächenbereich des Lichtempfängers so, dass die Schlitzweite des Blendenschlitzes beziehungsweise der Durchmesser der Öffnung in der Blende unter Berücksichtigung der Grössen des Distanzintervalls, des Blendenabstands vom Lichtempfänger, des Durchmessers, der Höhe und/oder der vollen Auslenkungsamplitude derart bemessen ist, dass das durch eine Auslenkung verursachte verschobene Beleuchtungsbild auch bei voller Auslenkungsamplitude noch innerhalb der Höhe des lichtempfindlichen Flächenbereichs fällt.

In einem weiteren Aspekt der Erfindung umfasst der Lichtempfänger eine Differentialphotodiode mit zwei getrennten, in einer Differenzschaltung betriebenen lichtempfindlichen Flächenbereichen von gleicher rechteckiger Form und Grösse, die sich in einem Abstand entlang eines in z-Richtung der vergleichsweise schmalen, in x-Richtung verlaufenden Trennbereichs gegenüberliegen. Dabei weist insbesondere die aus den beiden lichtempfindlichen Flächenbereichen und dem Trennbereich zusammensetzte Rechteckfläche eine Gesamthöhe in z-Richtung auf.

Entsprechend der Verteilung des von der Lichtquelle durch den Blendenschlitz eingestrahlten Lichtes erzeugt der erste lichtempfindliche Flächenbereich einen ersten Strom und der zweite lichtempfindliche Flächenbereich einen zweiten Strom, wobei die Stromdifferenz das der Auslenkung der Blendenfahne entsprechende Sensorsignal darstellt.

Die Stromversorgung der Lichtquelle wird mit Vorteil durch eine Regelschaltung in der Weise geregelt wird, dass die der gesamten von der Lichtquelle durch den Blendenschlitz auf den ersten lichtempfindlichen Flächenbereich und den zweiten lichtempfindlichen Flächenbereich fallenden Lichtmenge entsprechende Stromsumme konstant gehalten wird.

Dabei kann nun die konstant gehaltene Stromsumme als die oben erwähnte Normierungskonstante verwendet werden, um aus dem Positionssensorsignal S das normierte Positionssensorsignal und aus der Empfindlichkeit die normierte Empfindlichkeit zu bilden.

Eine weitere wichtige Schlussfolgerung aus den genannten Versuchen betrifft die Blendenöffnung und insbesondere, wenn diese als Blendenschlitz ausgebildet ist, die Schlitzweite der Blendenfahne. Einerseits sollte zur Erzielung eines robusten Sensorsignals möglichst viel Licht von der Lichtquelle durch den Blendenschlitz zum Lichtempfänger gelangen. Andrerseits zeigte sich, dass bei der erfindungsgemässen Anordnung der Blendenebene nahe beim Lichtempfänger die erwähnten wünschbaren Merkmale am besten erfüllt sind, wenn ein bestimmbarer Maximalwert der Schlitzweite nicht überschritten wird. Diese maximale Schlitzweite ergibt sich daraus, dass der vom eintreffenden Licht erfüllte Bereich (mit Einschluss der Übergangszone vom vollbeleuchteten Mittelbereich zur unbeleuchteten Umgebung) auch bei maximaler Auslenkung der Blendenfahne vollständig innerhalb eines lichtempfindlichen Flächenbereichs des Lichtempfängers liegen sollte.

Die näheren Ergebnisse der Untersuchung erlauben darüber hinaus spezifische Angaben, mit denen die Positionssensoranordnung optimiert werden kann und welche in der detaillierten Beschreibung anhand von Figuren erklärt werden.

Einzelheiten der erfindungsgemässen Wägezelle werden im folgenden anhand von Zeichnungen und Diagrammen beschrieben. Insofern als die abgebildeten Elemente von einer Zeichnung zur andern miteinander identisch sind, sind sie mit den gleichen Bezugssymbolen gekennzeichnet. Es zeigen:

Fig. 1 eine Waage mit elektromagnetischer Kraftkompensation in schematischer, beispielhafter Darstellung;

Fig. 2 einen optoelektronischen Positionssensor mit Lichtquelle, Lichtempfänger und Blendenfahne;

Fig. 3 eine auf einem Berechnungsmodell basierende graphische Darstellung, welche den Erfindungsgedanken veranschaulicht;

Fig. 4 eine graphische Darstellung des optischen Strahlengangs des Positionssensors, welche die erfindungsgemässe Wahl der Blendenschlitzweite illustriert..

Eine Waage oder Wägezelle 1 mit elektromagnetischer Kraftkompensation und optoelektronischem Positionssensor ist in schematischer Weise in Figur 1 dargestellt. Zur lagemässigen Orientierung ist ein kartesisches Koordinatensystem x, y, z beigefügt, dessen x- und z-Achsen in der Zeichenebene der Figur 1 liegen, während die y-Achse in den Halbraum hinter der Zeichenebene gerichtet ist. Man erkennt in dieser Darstellung das feststehende Basisteil 2, den am Basisteil 2 beweglich gelenkten Lastaufnehmer 3 zur Aufnahme der Gewichtskraft der zu wägenden Last 4, das am Basisteil 2 festgelegte topfförmige und hier im Querschnitt gezeigte Permanentmagnetsystem 5 mit Luftspalt 6, die im Luftspalt 6 bewegliche und vom Kompensationsstrom 7 durchflossene Spule 8, sowie die kraftübertragende mechanische Verbindung 9, hier in der Form eines Waagebalkens 9, zwischen dem Lastaufnehmer 3 und der Spule 8. Der optoelektronische Positionssensor (in Figur 1 mit Blick in y-Richtung symbolisch angedeutet und in Figur 2 mit Blick in x-Richtung im Detail dargestellt) erzeugt

das Positionssorsignal S, welches der durch das Auflegen der Last 4 auf den Lastaufnehmer 3 verursachten Auslenkung z der Spule 8 aus der Null-Lage entspricht. In Figur 1 ist diese Null-Lage symbolisch durch aufeinander eingespielte Pfeile 10 und 12, 13 angedeutet, wobei der mit dem Basisteil 2 verbundene Pfeil 12, 13 die Lichtquelle 12 und den Lichtempfänger 13 darstellt, welche einander gegenüberliegend mit einem Zwischenraum auf dem Basisteil 2 festgelegt sind (siehe Figur 2). Der mit dem Waagebalken 9 verbundene Pfeil 10 stellt die Blendenfahne 10 mit schlitzförmiger Blende 11 dar, welche sich in dem Zwischenraum im Sinne des Doppelpfeils 20 (siehe Figur 2) auf- und abbewegt und dabei durch Beeinflussung des von der Lichtquelle 12 zum Lichtempfänger 13 gerichteten Lichtstroms das Positionssensorsignal S erzeugt. Das Signal S des Positionssensors wird einem Regler 15 zugeführt, welcher daraufhin den Kompensationsstrom 7 so regelt, dass die Blendenfahne 10 zusammen mit dem Waagebalken 9, der Spule 8 und dem Lastaufnehmer 3 durch die elektromagnetische Kraft zwischen Spule 8 und Permanentmagnet 5 in die Null-Lage zurückführt wird, in welcher die elektromagnetische Kompensationskraft der Wägelast 4 Gleichgewicht hält. Nach den Gesetzen des Elektromagnetismus ist die Kompensationskraft proportional zum Spulenstrom 7, und folglich kann das Gewicht der auf den Lastempfänger 3 gebrachten Wägelast 4 durch Messung des Spulenstroms 7 bestimmt werden.

Die Figur 2 dient insbesondere zur Identifizierung der geometrischen Dimensionsgrössen mit entsprechenden Buchstabensymbolen. Die Lichtquelle 12 und der Lichtempfänger 13 liegen einander mit einem Distanzintervall d gegenüber. Die Blendenebene 16, in welcher sich die Blendenfahne 10 in z-Richtung innerhalb eines Auslenkungsbereichs $-a \leq z \leq a$ aufwärts und abwärts bewegen kann, liegt im Abstand $d_B$ vom Lichtempfänger 13 innerhalb eines an den Lichtempfänger 13 angrenzenden Unterbereichs u des Distanzintervalls d. Der Blendenschlitz 11 erstreckt sich in der oben definierten x-Richtung und hat die Schlitzweite b,

Die Lichtquelle 12 in einem typischen Ausführungsbeispiel der Erfindung besteht aus einer Leuchtdiode 17, die in einem Trägerblock 18 eingegossen ist und sich in der Mitte einer Vertiefung 19 befindet.

Der Lichtempfänger 13, in einem ebenfalls typischen Ausführungsbeispiel, besteht aus einer Differentialphotodiode, welche zwei getrennte, in einer Differenzschaltung betriebene lichtempfindliche Elemente mit den Flächenbereichen 21 und 22 von gleicher rechteckiger Form und Grösse umfasst, die sich im Abstand t entlang eines vergleichsweise schmalen, in x-Richtung verlaufenden Trennbereichs 23 gegenüberliegen. Die lichtempfindlichen Flächenbereiche 21, 22, haben eine Gesamthöhe h in z-Richtung und eine Gesamtbreite in x-Richtung

Wie bereits erwähnt, beruht die Funktionsweise des Lichtempfängers 13 zur Positionsmessung darauf, dass bei einer ausgelenkten, d.h. um den Abstand z aus der Null-Lage verschobenen Position der Blendenfahne 10 die von den beiden lichtempfindlichen Elementen erzeugten Ströme $I_1$ und $I_2$ verschieden gross sind, wobei die mit der Differenzschaltung der lichtempfindlichen Elementen erfasste Stromdifferenz $S = (I_1 - I_2)$ das elektrische Ausgangssignal des Lichtempfängers, also das Positionssensorsignal S darstellt. Die Positionssensorsignalfunktion S(z), d.h. die funktionelle Beziehung zwischen der Auslenkung z und dem Positionssensorsignal S wird in graphischer Darstellung als Kennlinie des Positionssensors bezeichnet. Bei einer symmetrischen Schaltung und Anordnung der lichtempfindlichen Flächenbereiche 21, 22 der lichtempfindlichen Elementen ist das bei einer Auslenkung -z erzeugte Signal S(-z) entgegengesetzt gleich gross wie das bei einer Auslenkung z erzeugte Signal S(z). Somit ist die Kennlinie S(z) eine ungerade Funktion, d.h. $S(-z) = -S(z)$, und verläuft deshalb in ihrer graphischen Darstellung zentralsymmetrisch zum Nullpunkt. Die Steigung der Kennlinie, d.h. die Ableitung dS/dz der Positionssensorsignalfunktion, wird im Folgenden auch als die Empfindlichkeit E des Positionssensors bezeichnet.

Um den Verlauf der Positionssensorsensorsignalfunktion S(z) unabhängig von einer fallweise unterschiedlich gegebenen Lichtstärke der Lichtquelle beurteilen zu können, ist es zweckmässig, wenn man anstatt des oben definierten Positionssensorsignals $S=(I_1-I_2)$ ein normiertes, dimensionsloses Positionssensorsignal $S^*= (I_1-I_2)/(I_1+I_2)$ betrachtet. Die Ableitung dS*/dz dieses normierten Positionssensorsignals S* wird im Folgenden als normierte Empfindlichkeit E* des Positionssensor bezeichnet und hat die Dimension [mm$^{-1}$].

In einer nachfolgend beschriebenen bevorzugten Ausführungsform des erfindungsgemässen Positionssensors wird die Lichtstärke der Lichtquelle elektronisch in der Weise geregelt, dass die Summe $(I_1+I_2)$ konstant bleibt. Mit der Normierungskonstante $N = I_1+I_2$ ergibt sich in diesem Falle eine normierte Positionssensorsignalfunktion:

$$S^* = (I_1-I_2)/N = S/N$$

und aus

$$dS^*/dz = (1/N) \times dS/dz$$

mit

$$E = dS/dz$$

somit eine normierte Empfindlichkeit

$$E^* = E/N.$$

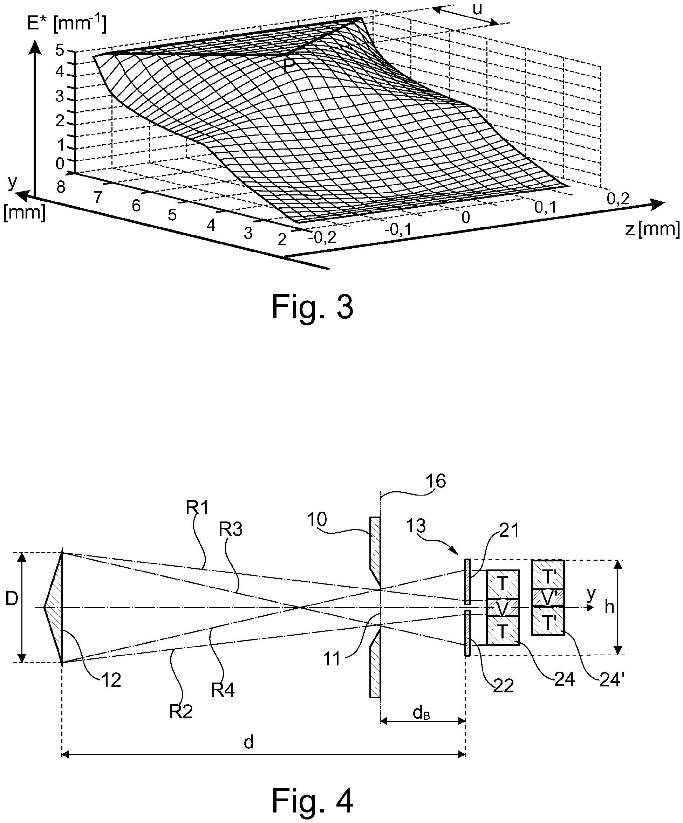

In Figur 3 wird die normierte Empfindlichkeit $E^*$ als Funktion der Auslenkung z und des von der Lichtquelle aus gemessenen Abstandes y der Blendenebene in einer dreidimensionalen Graphik dargestellt. Diese auf einem theoretischen Modell des Positionssensors basierende Darstellung basiert auf typischen Dimensionen einer praktischen Ausführung des erfindungsgemässen Positionssensors, mit einem Abstand d = 8 mm von der Lichtquelle zur Blendenebene, einem Auslenkungsbereich der Blendenfahne von a = ± 0.2 mm, einer Gesamthöhe h des lichtempfindlichen Flächenbereichs der Differentialphoto-diode von rund 1.4 mm, einer Trennzone 23 mit einer Breite t von etwa 0.1 mm zwischen den zwei lichtempfindlichen Flächenbereichen 21 und 22 der Differentialphotodiode, sowie einer Blendenschlitzweite b von etwa 0.7 mm. Diese Graphik zeigt, dass die normierte Empfindlichkeit $E^*$ mit zunehmendem Abstand y der Blendenebene von der Lichtquelle im Bereich von y = 4 mm bis 6 mm stark ansteigt und insbesondere bei y > 6 mm innerhalb eines dreieckigen, dem Lichtempfänger benachbarten Plateau-Bereiches einen etwa konstanten Wert von etwa 5 mm$^{-1}$ annimmt, bzw. mit erheblich kleinerer Steigung verläuft.

Für einen Positionssensor gemäss Figur 2, dessen Dimensionsverhältnisse zumindest grössenordnungsmässig den obenstehenden Angaben entsprechen, ergibt sich somit aus der Graphik in Figur 3, dass bezüglich der Lage y der Blendenebene ein dem Lichtempfänger benachbarter Unterbereich u des Distanzintervalls d von der Lichtquelle zum Lichtempfänger existiert, innerhalb welchem 1.) die normierte Empfindlichkeit ihren höchsten Wert erreicht, 2.) die normierte Empfindlichkeit über den innerhalb des Dreiecks liegenden Bereichs der Auslenkung z nahezu konstant und die Signalfunktion S(z) somit in diesem z-Bereich linear ist, und 3.) die normierte Empfindlichkeit sich innerhalb des dreieckigen Bereiches auch dann nicht ändert, wenn man die Blendenebene in Richtung der optischen Achse y verschiebt.

Wie oben erwähnt wird die Lichtstärke der Lichtquelle in einer bevorzugten Ausführungsform des erfindungsgemässen Positionssensors elektronisch in der Weise geregelt, dass die Stromsumme ($I_1$+$I_2$) für die beiden lichtempfindlichen Flächenbereiche des Lichtempfängers konstant bleibt. Abgesehen von dem Proportionalitätsfaktor N = $I_1$+$I_2$ gelten somit die Graphik in Figur 3 sowie die oben gezogenen Schlussfolgerungen auch für die nicht normierte Empfindlichkeit E.

Der Unterbereich u vom Scheitelpunkt P des dreieckigen Plateaubereichs zur Oberfläche des Lichtempfängers entspricht im abgebildeten typischen Beispiel von Figur 3 ungefähr einem Viertel des Distanzintervalls d von der Lichtquelle zum Lichtempfänger. Es ist jedoch zweckmässig, die Blendenebene noch näher am Lichtempfänger anzuordnen, damit die Empfindlichkeit bei einer Verschiebung der Blendenebene in y-Richtung nicht nur in der Nähe von z = 0 sondern auch über einen grösseren Bereich der Auslenkung z konstant bleibt. Andrerseits sollte zwischen der Blendenfahne und dem Lichtempfänger ein genügend grosser freier Abstand vorhanden sein, damit Produktionstoleranzen problemlos aufgefangen werden können, und damit insbesondere jede Möglichkeit einer Berührung oder auch die Bildung von Staubbrücken zwischen der Blendenfahne und dem Lichtempfänger absolut vermieden wird. Bei einem Positionssensor mit den obengenannten Abmessungen wurden gute Resultate erzielt mit einem freien Abstand von etwa 0.8 mm bis 1.2 mm zwischen der Blendenfahne und dem Lichtempfänger.

Figur 4 illustriert die massgebenden Gesichtspunkte bei der Wahl der Blendenschlitzweite b. Dargestellt ist der Beleuchtungsstrahlengang von der Lichtquelle 12 durch den Schlitz 11 der Blendenfahne 10 zum Lichtempfänger 13. Man erkennt, dass die Randstrahlen R1 und R2 auf der Lichtempfängeroberfläche einen zentralen Vollbeleuchtungsbereich V begrenzen, an den sich oben und unten zwei Teilbeleuchtungsbereiche T anschliessen, welche aussen durch die Schnittpunkte der Randstrahlen R3 und R4 mit den lichtempfindlichen Flächenbereichen 21 ,22 begrenzt sind und in welchen die Beleuchtung vom Vollbeleuchtungsbereich V nach oben und unten kontinuierlich auf null abfällt. Die angrenzenden Bereiche der lichtempfindlichen Flächenbereiche 21 ,22 ausserhalb des oberen und unteren Teillichtbereiches T liegen völlig im Schatten der Blendenfahne.

Bei einer ausgelenkten Lage der Blendfahne verschiebt sich das ganze Beleuchtungsbild 24 mit dem Vollbeleuchtungsbereich V und den Teilbeleuchtungsbereichen T entsprechend nach oben oder unten. Das Berechnungsmodell für die Graphik von Figur 3 beruht auf der Annahme, dass das auf die lichtempfindlichen Flächenbereiche 21 ,22 projizierte Beleuchtungsbild 24 bei jeder Auslenkung z innerhalb eines Auslenkungsbereiches -a ≤ z ≤ +a vollständig innerhalb des lichtempfindlichen Gesamtbereichs 21, 22 verbleibt. Wenn die übrigen Abmessungen und Abstände der Sensoranordnung sowie die Maximalauslenkung a gegeben sind, kann man somit durch eine geometrische Betrachtung des Strahlengangs die maximal zulässige Schlitzweite so bestimmen, dass z.B. bei der Maximalauslenkung +a das entsprechend verschobene Beleuchtungsbild 24' gerade noch innerhalb der Höhe h des lichtempfindlichen Gesamtbereichs auftrifft. Eine kleinere als die so bestimmte maximale Schlitzweite ist jedoch im allgemeinen nicht immer wünschbar, denn dies würde nur die auf den Lichtempfänger 13 einfallende Lichtmenge verringern. Bei einem Positionssensor mit den obengenannten Abmessungen führt diese Überlegung zu einer praktischen Blendenschlitzweite b von 0.6 bis 1 mm.

Obwohl die Erfindung durch die Darstellung eines spezifischen Ausführungsbeispiels beschrieben worden ist, ist es offensichtlich, dass zahlreiche weitere Ausführungsvarianten in Kenntnis der vorliegenden Erfindung geschaffen werden können, beispielsweise indem die gezeigten handelsüblichen Ausführungsformen der Lichtquelle und des Lichtempfängers durch andere Ausführungsformen ersetzt werden, oder indem die als Beispiele genannten Abmessungen variiert werden. Ferner ist auch die Verwendung eines Lichtempfängers, der mit einem einzigen lichtempfindlichen Element mit lichtempfindlichem Flächenbereich ausgestaltet ist, denkbar, beispielsweise in Form eines sogenannten optischen Positionssensor (photo sensitive detector oder -device PSD).

Bezugszeichenliste

| 1 | Waage, Wägezelle |
|---|---|
| 2 | Basisteil |
| 3 | Lastaufnehmer |
| 4 | Last, Wägelast |
| 5 | Permanentmagnetsystem |
| 6 | Luftspalt |
| 7 | Kompensationsstrom, Spulenstrom |
| 8 | Spule |
| 9 | Waagebalken |
| 10 | Blendenfahne |
| 11 | Blendenschlitz |
| 12 | Lichtquelle |
| 13 | Lichtempfänger |
| 15 | Regler |
| 16 | Blendenebene |
| 17 | Leuchtdiode |
| 18 | Trägerblock |
| 19 | Vertiefung |
| 20 | Doppelpfeil |
| 21, 22 | lichtempfindliche Flächenbereiche von 13 |
| 23 | Trennzone zwischen 21 und 22 |
| 24, 24' | Beleuchtungsbild |
| x, y, | z Achsrichtungen |
| V, V' | Vollbeleuchtungsbereich |
| T, T' | Teilbeleuchtungsbereiche |
| u | Unterbereich |
| R1, R2, R3, R4 | Randstrahlen |

Liste der geometrischen and physikalischen Grössen

| d | Distanzintervall |
|---|---|
| $d_B$ | Blendenabstand |
| D | Durchmesser von 19 |
| b | Breite von 11 |
| t | Breite von 23 |
| h | Gesamthöhe über 21, 22 und 23 |
| $I_1, I_2$ | Ströme, die in 21 und 22 durch Lichteinfall erzeugt werden |
| S, S(z) | Signalfunktion des Positionssensors |
| S*, S*(z) | normierte Signalfunktion des Positionssensors |
| E, dS/dz | Empfindlichkeit des Positionssensors |
| E*, dS*/dz | normierte Empfindlichkeit des Positionssensors |
| N | Normierungskonstante |

**Patentansprüche**

1. Wägezelle (1), basierend auf dem Prinzip der elektromagnetischen Kraftkompensation, mit einem feststehenden Basisteil (2), einem am Basisteil (2) beweglich gelenkten Lastaufnehmer (3) zur Aufnahme der Gewichtskraft einer zu wägenden Last (4), einem Permanentmagnetsystem (5) mit einem Luftspalt (6), einer im Luftspalt (6) beweglichen und im Messbetrieb von einem Kompensationsstrom (7) durchflossenen Spule (8), sowie mit einer kraftübertragenden mechanischen Verbindung (9) zwischen dem Lastaufnehmer (3) und der Spule (8); ferner mit einem optoelektronischen Positionssensor, welcher eine Lichtquelle (12), einen Lichtempfänger (13), sowie eine an der beweglichen kraftübertragenden Verbindung festgelegte Blendenfahne (10) umfasst, wobei die Mittelpunkte der Lichtquelle (12) und des Lichtempfängers (13) eine optische Achse (y) definieren und wobei die Lichtquelle (12) und der Lichtempfänger (13) einander in einem Distanzintervall (d) gegenüberliegen und die Blendenfahne (10) in einem Blendenabstand ($d_B$) auf der optischen Achse zwischen der Lichtquelle (12) und dem Lichtempfänger (13) beweglich angeordnet ist, wobei mit dem Lichtempfänger (13) ein Positionssensorsignal (S) erzeugbar ist, welches einer durch das Auflegen der Last (4) auf den Lastaufnehmer (3) verursachten Auslenkung (z) der Blendenfahne (10) aus einer Null-Lage entspricht, wobei ein Regler (15) vorhanden ist, mit welchem der Kompensationsstrom (7) aufgrund des Positionssensorsignals (S) in der Weise regelbar ist, dass die Blendenfahne (10) und die mit ihr verbundenen beweglichen Teile der Wägezelle durch die elektromagnetische Kraft zwischen der Spule (8) und dem Permanentmagnetsystem (5) in die Null-Lage zurückgeführt werden; **dadurch gekennzeichnet, dass** der Blendenabstand ($d_B$) in einem dem Lichtempfänger (13) benachbarten Unterbereich (u) des Distanzintervalls (d) liegt, wobei sich dieser Unterbereich (u) über höchstens ein Drittel des Distanzintervalls (d) erstreckt.

2. Wägezelle (1) nach Anspruch 1, **dadurch gekennzeichnet, dass** sich der Unterbereich (u) gegenüber dem Rest des Distanzintervalls (d) dadurch auszeichnet, dass die auf eine Normierungskonstante (N) bezogene, der Ableitung des Positionssensorsignals (S) nach der Auslenkung (z) der Blendenfahne entsprechende normierte Empfindlichkeit (E*) des Positionssensors im Wesentlichen ihren Maximalwert einnimmt.

3. Wägezelle (1) nach Anspruch 2, **dadurch gekennzeichnet, dass** innerhalb des Unterbereichs (u) die auf eine Normierungskonstante (N) bezogene normierte Sensorsignalfunktion (S*(z)) zumindest innerhalb eines beschränkten und sich mit abnehmendem Blendenabstand ($d_B$) vergrössernden Bereiches der Auslenkung (z) im wesentlichen linear ist.

4. Wägezelle (1) nach Anspruch 3, **dadurch gekennzeichnet, dass** innerhalb des Unterbereichs (u) und desselben beschränkten Bereiches der Auslenkung (z) sich die normierte Empfindlichkeit (E*) bei einer Änderung des Blendenabstandes ($d_B$) im Wesentlichen nicht ändert.

5. Wägezelle gemäss Anspruch 3 oder 4, **dadurch gekennzeichnet, dass** die Auslenkung (z) der Blendenfahne (10) durch Anschläge auf den Auslenkungsbereich (-a ≤ z ≤ +a) einer vollen Auslenkungsamplitude (a) beschränkt ist.

6. Wägezelle gemäss einem der Ansprüche 1 bis 5, **dadurch gekennzeichnet, dass** die Lichtquelle (12) eine in einen Trägerblock (18) integrierte Leuchtdiode (17) umfasst.

7. Wägezelle gemäss einem der Ansprüche 1 bis 6, **dadurch gekennzeichnet, dass** der Lichtempfänger (13) mindestens einen lichtempfindlichen Flächenbereich (21, 22) mit einer vorgegebenen Höhe (h) in z-Richtung aufweist.

8. Wägezelle gemäss einem der Ansprüche 1 bis 7, **dadurch gekennzeichnet, dass** die Blendenfahne (10) eine Blendenöffnung, insbesondere einen Blendenschlitz (11) mit einer Schlitzweite (b) in z-Richtung, aufweist.

9. Wägezelle gemäss einem der Ansprüche 1 bis 7, **dadurch gekennzeichnet, dass** die Blendenfahne (10) eine Blendenöffnung, insbesondere ein Rundloch, oder ein Langloch mit einer Weite (b) in z-Richtung, aufweist.

10. Wägezelle gemäss Anspruch 8 oder 9, wobei das von der Lichtquelle (12) durch den Blendenschlitz (11) bzw. das Rundloch oder das Langloch gestrahlte Licht ein Beleuchtungsbild (24) auf dem lichtempfindlichen Flächenbereich (21, 22) des Lichtempfängers (13) projiziert, **dadurch gekennzeichnet, dass** die Schlitzweite (b) des Blendenschlitzes unter Berücksichtigung der Grössen des Distanzintervalls (d), des Blendenabstands ($d_B$), des Durchmessers (D), der Höhe (h) und/oder der vollen Auslenkungsamplitude (a) so bemessen ist, dass das durch eine Auslenkung verursachte verschobene Beleuchtungsbild (24') auch bei voller Auslenkungsamplitude (a) noch innerhalb der Höhe (h) des lichtempfindlichen Flächenbereichs (21, 22) fällt.

11. Wägezelle gemäss einem der Ansprüche 1 bis 10, **dadurch gekennzeichnet, dass** der Lichtempfänger (13) eine Differentialphotodiode mit zwei getrennten, in einer Differenzschaltung betriebenen lichtempfindlichen Flächenbereichen (21, 22) von gleicher rechteckiger Form und Grösse umfasst, die sich in einem Abstand (t) entlang eines in z-Richtung vergleichsweise schmalen, in x- Richtung verlaufenden Trennbereichs (23) gegenüberliegen,

12. Wägezelle gemäss einem der Ansprüche 8 bis 11, **dadurch gekennzeichnet, dass** entsprechend der Verteilung des von der Lichtquelle (12) durch den Blendenschlitz (11), bzw. das Rundloch oder das Langloch eingestrahlten Lichtes der erste lichtempfindliche Flächenbereich (21) einen ersten Strom $I_1$ und der zweite lichtempfindliche Flächenbereich (22) einen zweiten Strom $I_2$ erzeugt, wobei die Stromdifferenz ($I_1 - I_2$) das der Auslenkung (z) der Blendenfahne (10) entsprechende Positionssensorsignal (S) darstellt.

13. Wägezelle gemäss Anspruch 12, **dadurch gekennzeichnet dass** die Stromversorgung der Lichtquelle (12) durch eine Regelschaltung in der Weise geregelt wird, dass die der gesamten von der Lichtquelle (12) durch den Blendenschlitz (11) auf den ersten lichtempfindlichen Flächenbereich (21) und den zweiten lichtempfindlichen Flächenbereich (22) fallenden Lichtmenge entsprechende Stromsumme ($I_1 + I_2$) konstant gehalten wird.

14. Wägezelle gemäss Anspruch 13, **dadurch gekennzeichnet dass** die konstant gehaltene Stromsumme ($I_1 + I_2$) als Normierungskonstante (N) verwendet wird, um aus dem Positionssensorsignal (S) das normierte Positionssensorsignal (S*) und aus der Empfindlichkeit (E) die normierte Empfindlichkeit (E*) zu bilden.

15. Wägezelle gemäss einem der Ansprüche 1 bis 14, **dadurch gekennzeichnet, dass** das Permanentmagnetsystem (5) am Basisteil (2) festgelegt ist und/oder dass der optoelektronische Positionssensor am Basisteil (2) festgelegt ist.

**Fig. 1**

**Fig. 2**

Fig. 3

Fig. 4

Europäisches
Patentamt

European
Patent Office

Office européen
des brevets

# EUROPÄISCHER RECHERCHENBERICHT

Nummer der Anmeldung

EP 12 15 7426

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2 958 786 A (MILLIS EDWIN G) 1. November 1960 (1960-11-01) | 1-10,12, 15 | INV. G01G7/04 |
| Y | * Ansprüche 4,11; Abbildungen 1,8 * ----- | 11 | |
| X | US 2 141 175 A (DAWSON SAMUEL E) 27. Dezember 1938 (1938-12-27) * Zusammenfassung * ----- | 1 | |
| Y | US 2006/118343 A1 (SATOH TSUYOSHI [JP] ET AL) 8. Juni 2006 (2006-06-08) * Anspruch 5; Abbildung 1 * ----- | 11 | |
| T | ANONYM: "Geometric Unsharpness Calculations", NDT Education Resource Center , XP002680760, Gefunden im Internet: URL:http://www.ndt-ed.org/GeneralResources /Formula/RTFormula/Unsharpness/GeometricUn sharpness.htm [gefunden am 2012-07-25] * Seite 1 - Seite 1; Abbildung * ----- | 1-15 | |

| | RECHERCHIERTE SACHGEBIETE (IPC) |
|---|---|
| | G01G |

Der vorliegende Recherchenbericht wurde für alle Patentansprüche erstellt

| Recherchenort | Abschlußdatum der Recherche | Prüfer |
|---|---|---|
| Den Haag | 25. Juli 2012 | Pugno, Roberto |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 12 15 7426

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-07-2012

| Im Recherchenbericht angeführtes Patentdokument | | Datum der Veröffentlichung | Mitglied(er) der Patentfamilie | | Datum der Veröffentlichung |
|---|---|---|---|---|---|
| US 2958786 | A | 01-11-1960 | GB | 815933 A | 01-07-1959 |
| | | | US | 2958786 A | 01-11-1960 |
| US 2141175 | A | 27-12-1938 | KEINE | | |
| US 2006118343 | A1 | 08-06-2006 | CN | 1782678 A | 07-06-2006 |
| | | | JP | 2006162302 A | 22-06-2006 |
| | | | US | 2006118343 A1 | 08-06-2006 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CH 463137
- US 5338902 A
- US 3805907 A